# EUROPÄISCHE PATENTSCHRIFT

(11) **EP 0 828 102 B1**
(45) Veröffentlichungstag und Bekanntmachung des Hinweises auf die Patenterteilung: **21.11.2001**
(21) Anmeldenummer: 97114903.4
(22) Anmeldetag: 28.08.1997
(51) Int. Cl.: F16K 31/12, F01D 17/14

(54) **Dampfturbinensteuerung**
Steam turbine control
Contrôle d'une turbine à vapeur

(30) Priorität: 10.09.1996 DE 19636674
(43) Veröffentlichungstag der Anmeldung: 11.03.1998
(73) Patentinhaber: MAN Turbomaschinen AG GHH BORSIG, 46145 Oberhausen (DE)
(72) Erfinder: Zimmermann, Achim, Dipl.-Ing., 45481 Mülheim (DE)
(74) Vertreter: Radünz, Ingo, Dipl.-Ing.

(56) Entgegenhaltungen:
- WO-A-91/02915
- WO-A-94/16580
- FR-A- 1 601 276
- US-A- 5 277 403

## Beschreibung

Die Erfindung betrifft ein Dampfstellventil für Dampfturbinen nach dem Oberbegriff des Anspruchs 1.

Bekannt sind druckausgeglichene Dampf-Stellventile für Dampfturbinen, die als Einfach- oder Doppelsitzventile ausgeführt werden und die mittels ölhydraulischer Antriebe betätigt werden.

Das Doppelsitzventil ist infolge der Rücken an Rücken-Anordnung zweier Ventilteller oder -kegel druckausgeglichen, so daß infolge des minimalen Differenzdrucks auf das Ventil keine nennenswerten öffnungskräfte aus dem Dampfdruck in geschlossenem Zustand des Ventils entstehen.

Da somit die hydraulischen Antriebe kleiner ausfallen können, ist auch die Kraft für die Ölverdrängung beim Schließvorgang geringer, und da wegen der geringeren Verstellkräfte auch der Querschnitt der Ventilspindel geringer ausfallen kann, ist auch der Spindelauftrieb in geöffnetem Zustand des Ventils geringer und die Vorspannung der Schließfeder kann geringer ausfallen. Das heißt, die notwendigen Kräfte zur Betätigung eines Doppelsitzventils sind relativ gering.

Das Doppelsitzventil ist aus technischen Gründen jedoch fast nie dicht. Dies liegt zum einen an der konstruktiven Überbestimmtheit bei der Bemaßung des Abstandes der beiden Ventilsitze und zum anderen an der nicht exakt gleichen Wärmeausdehnung von Ventilgehäuse und Ventilspindel mit den zwei integralen Ventiltellern.

Bei dem bekannten Einfachsitzventil in Kolbenbauweise wird wie bei der vorliegenden Erfindung die Rückseite des Ventils mit dem gleichen Druck beaufschlagt, wie er in Strömungsrichtung gesehen hinter dem Ventil herrscht.

Durch die notwendige Anbindung der Ventilspindel auf der Rückseite des Ventilkegels fällt die Querschnittsfläche der Ventilspindel jedoch für einen vollständigen Druckausgleich weg. Wie beim Doppelsitzventil kann der Querschnitt der Ventilspindel geringer ausfallen als bei einem Ventil ohne Druckausgleich. Wegen des somit geringeren Spindelauftriebs kann auch die Schließfeder mit geringerer Vorspannung eingebaut werden. Das heißt, wie beim Doppelsitzventil sind die erforderlichen Kräfte zur Betätigung des Ventils gering.

Der als Kolben ausgeführte Ventilkegel ist notwendigerweise gegen den als Büchse ausgeführten Ventileinsatz abgedichtet. Die Dampfleckage über diesen Dichtring (Dichtringe) fließt jedoch über die Druckausgleichsbohrungen im Ventilkegel der Beschaufelung der Turbine zu. Dieses kann bei hohen Dampfdrücken zu einem ungewollten Anlaufen der Turbine führen.

Ein Dampfstellventil dieser Art ist aus dem Dokument WO9102915 bekannt.

Die ölhydraulischen Antriebe der genannten Dampf-Stellventile werden aus Gründen des Brandschutzes heute immer außerhalb des Bereiches heißer Turbinenteile angeordnet. Das heißt, daß Ventile und Antriebe unterhalb der Turbine angeordnet werden müssen; oder, daß bei Anordnung der Ventile oberhalb der Turbine die hydraulischen Antriebe über Hebel und Umlenkungen ihre Funktion erfüllen müssen.

Aufgabe der Erfindung ist es, ein Dampf-Stellventil zu entwickeln, welches minimale Verstellkräfte erfordert und in geschlossenem Zustand dicht ist und was einschließlich seines Antriebs oberhalb der Turbine angeordnet werden kann, ohne daß, wie bei ölhydraulischen Antrieben gegeben, die Gefahr eines Ölbrandes entsteht.

Weiterhin soll das Ventil einschließlich seines hydraulischen Antriebs in jeder Einbaulage angeordnet werden können, also auch in hängender Lage unterhalb der Turbine.

Die Lösung der Aufgabe erfolgt entsprechend dem kennzeichnenden Merkmal von Anspruch 1. Die Unteransprüche stellen eine vorteilhafte Ausgestaltung der Erfindung dar.

Erfindungsgemäß besteht das Ventil aus einem Ventilkegel, der mit zwei oder mehreren axialen Bohrungen versehen ist, so daß unterhalb und oberhalb des Ventilkegels jeweils der gleiche Druck herrscht. Der Ventilkegel wird in einem Ventileinsatz geführt und mit oberen und unteren Kolbenringen gegen diesen abgedichtet.

Die Ventilkegeldurchmesser oben und unten sind so bemessen, daß die obere dampfbeaufschlagte Kegelfläche unter Berücksichtigung des Spindelquerschnitts der Fläche der Kegelunterseite entspricht. Der Ventilkegel befindet sich somit hinsichtlich der von oben und unten auf ihn einwirkenden Druckkräfte im Gleichgewicht. Infolge dieses Gleichgewichts sind die Verstellkräfte für das Ventil gering, so daß der Spindeldurchmesser klein gehalten werden kann. Die Spindel ist mit einer Stopfbuchspackung gegen den Ventileinsatz abgedichtet.

Die zu überwindenden Kräfte beim Verstellvorgang des Stellventils resultieren nur aus der Reibung der Kolbenringe und der wegen des geringen Spindeldurchmessers geringen Reibung in der Stopfbuchspackung und einer in Schließrichtung wirkenden Feder, die in oder unterhalb des Hydraulikantriebs angeordnet sein kann sowie letztendlich aus dem Auftrieb, der aus dem Druck in der ringförmigen Absaugkammer auf die unterschiedlichen kammerbildenden Ringflächen des Ventilkegels in Verbindung mit dem Ventileinsatz herrührt.

Zur Vermeidung von Dampfleckagen bei geschlossenem Stellventil (der Ventilkegel sitzt auf dem Ventildiffusor auf) über die Kolbenringe und die axialen Bohrungen ist der Ventilkegel mit einer Eindrehung versehen, welche mit dem oberen und unteren Ventileinsatz eine Kammer bildet. Aus dieser Kammer wird über einen oder mehrere Kanäle, die im Ventileinsatz angeordnet sind, Leckagedampf zu einem atmosphärischen oder niedrigeren Druckniveau hin abgesaugt.

Um den Einbau des Ventilkegels in den Ventileinsatz zu ermöglichen, ist der Ventileinsatz zweigeteilt. Die beiden Teile des Ventileinsatzes sind teleskopähnlich zusammengesteckt.

Betätigt wird das Ventil mittels eines hydraulischen Antriebes. Ein entscheidendes Merkmal der vorliegenden Erfindung ist der Einsatz von Klarwasser als Hydraulikflüssigkeit zum Antrieb des Dampfstellventils. Mit dieser Ausführung des Antriebes wird dem Umweltschutz und dem Brandschutz auf einfache Weise genüge getan.

Für Anlagen, die Minustemperaturen ausgesetzt sind, wird dem Klarwasser ein handelsübliches Frostschutzmittel zugesetzt.

Die Erfindung wird anhand eines schematischen Ausführungsbeispiels näher erläutert.

Es zeigen:
- Fig. 1: einen Schnitt durch das Stellventil mit Hydraulikantrieb,
- Fig. 2: einen vergrößerten Schnitt durch das Stellventil.

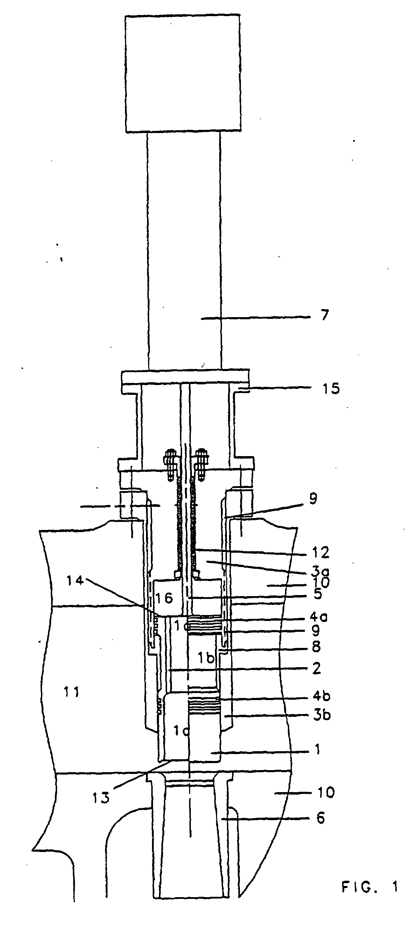

Fig. 1 zeigt einen Schnitt durch das Stellventil mit aufgesetztem wasserhydraulischen Antrieb (7) und der Antriebslaterne (15). Die Ventilspindel (5) des Ventilkegels (1) wird durch eine Dichtungspackung (12) geführt, die im Oberteil des Ventileinsatzes (3a) angeordnet ist.

Der Ventileinsatz (3a und 3b) und der Ventildiffusor (6) sind im Ventilgehäuse (10) lösbar befestigt. Der untere Teil des Ventileinsatzes (3b) ragt in den Dampfraum (11) hinein. Der Ventileinsatz (3) ist zweiteilig ausgeführt, er besteht aus dem Oberteil (3a) und dem Unterteil (3b), die ineinandergeschoben werden und verschraubt sind.

Der Ventilkegel (1) gleitet, durch jeweils drei Kolbenringe (4) abgedichtet, in den Ventileinsatzteilen (3a) und (3b).

Die ineinandergeschobenen Ventileinsatzteile (3a) und (3b) bilden an ihrer Trennstelle mittels Längsnuten und Eindrehung des Oberteils (3a) einen Strömungskanal (9), der als Absaugkanal für Leckagedampf ausgebildet und an eine Absaugeleitung (17) angeschlossen ist.

In den Ventilkegel (1) sind durchgehende axiale Bohrungen (2) eingebracht. Oberhalb des Ventilkegels (1) bildet sich eine Kammer (16), die durch die Bohrungen (2) mit Dampf beaufschlagt wird.

Durch die Eindrehung des Ventilkegels (1) im mittleren Bereich (1b) bildet sich zwischen Ventilkegel (1) und Ventileinsatz (3a und 3b) eine Kammer (8), an die ein Absaugkanal (9) angeschlossen ist.

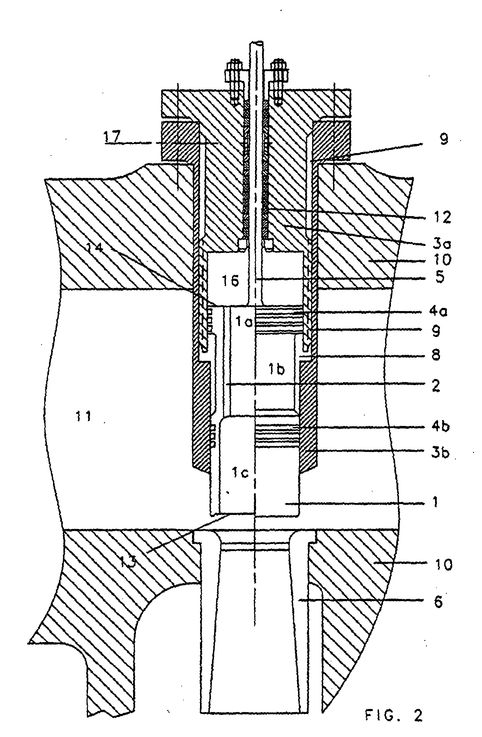

Fig. 2 zeigt einen Schnitt im vergrößerten Maßstab durch das Stellventil, jedoch ohne den wasserhydraulischen Antrieb. Der Ventileinsatz (3a und 3b) im Ventilgehäuse (10) ist hier jeweils schraffiert dargestellt.

Der Ventilkegel (1) ist an einer Ventilspindel (5) befestigt. Sowohl die obere (14) als auch die untere (13) Fläche des Ventilkegels (1a) und (1c) sind druckbeaufschlagt. Die untere druckbeaufschlagte Fläche (13) schließt bei geschlossenem Ventilzustand mit dem Ventildiffusor (6), der in das Ventilgehäuse (10) eingesetzt ist, ab. Die übrigen Merkmale von Fig. 2 sind mit Fig. 1 identisch.

### Bezugsziffernliste:

- 1: Ventilkegel
- 1a: Oberteil von 1
- 1b: Mittelteil von 1
- 1c: Unterteil
- 2: Axialbohrungen in 1
- 3: Ventileinatz
- 3a: Oberteil des Ventileinsatzes
- 3b: Unterteil des Ventileinsatzes
- 4: Kolbenringe
- 4a: Kolbenringe in 1a
- 4b: Kolbenringe in 1c
- 5: Ventilspindel
- 6: Ventildiffusor
- 7: Klarwasser-Hydraulik-Antrieb
- 8: Kammer
- 9: Strömungskanal
- 10: Ventilgehäuse
- 11: Dampfraum
- 12: Dichtungspackung
- 13: untere druckbeaufschlagte Fläche
- 14: obere druckbeaufschlagte Fläche
- 15: Antriebslaterne
- 16: Kammer
- 17: Absaugeleitung

## Patentansprüche

1. Dampfstellventil für Dampfturbinen mit einem im Ventilgehäuse angeordneten Ventileinsatz (3), mit einer in einer Dichtungspackung (12) geführten Ventilspindel (5) mit einem im Ventileinsatz (3) gleitenden Ventilkegel (1) und mit einem im Ventilgehäuse angeordneten Ventildiffusor (6), wobei die obere druckbeaufschlagte Fläche (14) des Ventilkegels (1) und die untere druckbeaufschlagte Fläche (13) des Ventilkegels durch mindestens eine axiale Bohrung (2) miteinander verbunden sind, **dadurch gekennzeichnet,**
- **daß** in dem im Ventileinsatz-Oberteil (3a) gleitenden Oberteil (1a) eines Ventilkegels (1) Kolbenringe (4a) eingesetzt sind,
- **daß** in dem im Ventileinsatz-Unterteil (3b) gleitenden Unterteil (1c) eines Ventilkegels (1) Kolbenringe (4b) eingesetzt sind,
- **daß** die obere druckbeaufschlagte Fläche (14) des Ventilkegels (1) genau so groß ist wie die untere druckbeaufschlagte Fläche (13) des Ventilkegels (1).
- **daß** der Ventilkegel (1) im mittleren Teil (1b) einen kleineren Durchmesser aufweist und mit dem Ober- und Unterteil (3a und 3b) des Ventileinsatzes eine ringförmige Kammer (8) bildet, an die mindestens ein Absaugkanal (9) mit einem Absauganschluß (17) angeschlossen ist, und
- **daß** das Dampfstellventil mit einem Klarwasser-Hydraulik-Antrieb (7) betätigt wird.

2. Dampfstellventil nach Anspruch 1,
**dadurch gekennzeichnet,**
**daß** dem Klarwasser des Hydraulik-Antriebes (7) ein Frostschutzmittel beigemischt wird.

3. Dampfstellventil nach den Ansprüchen 1 - 2,
**dadurch gekennzeichnet,**
**daß** der Ventilkegel (1), der Ventileinsatz (3) und das Ventilgehäuse (10) einschließlich des Klarwasser-Hydraulik-Antriebes (7) in jeder räumlichen Lage an der Dampfturbine oder Turbomaschine angeordnet wird.

## Claims

1. Steam setting valve for steam turbines with a valve insert (3) arranged in the valve housing, with a valve spindle (5), which is guided in a sealing packing (16), with a valve cone (1) sliding in the valve insert (3) and with a valve diffusor (6) arranged in the valve housing, wherein the upper pressure-loaded surface (14) of the valve cone (1) and the lower pressure-loaded surface (13) of the valve cone are connected together by at least one axial bore (2), **characterised in that**
- piston rings (4a) are inserted into the upper part (1a), which slides in the valve insert upper part (3a), of a valve cone (1),
- piston rings (4b) are inserted into the lower part (1c), which slides in the valve insert lower part (3b), of a valve cone (1),
- the upper pressure-loaded surface (14) of the valve cone (1) is exactly the same size as the lower pressure-loaded surface (13) of the valve cone (1),
- the valve cone (1) has in the middle part (1b) a smaller diameter and forms together with the upper part and lower part (3a and 3b) of the valve insert an annular chamber (8) with which at least one suction channel (9) is connected by a suction connecting piece (17) and
- the steam setting valve is actuated by a clarified water hydraulic drive (7).

2. Steam setting device according to claim 1, **characterised in that** an antifreeze compound is admixed with the clarified water of the hydraulic drive (7).

3. Steam setting device according to claims 1 and 2, **characterised in that** the valve cone (1), the valve insert (3) and the valve housing (10) inclusive of the clarified water hydraulic drive (7) is arranged in any physical position at the steam turbine or turbomachine.

## Revendications

1. Soupape de réglage de vapeur pour des turbines à vapeur, comprenant un mécanisme de soupape (3) disposé dans le corps de soupape, une tige de soupape (5) guidée dans une garniture (12), un cône de soupape (1) glissant dans le mécanisme de soupape (3), et un diffuseur (6) disposé dans le corps de soupape, la surface supérieure sollicitée en pression (14) du cône de soupape (1) et la surface inférieure sollicitée en pression (13) du cône de soupape étant reliées entre elles par au moins un trou axial (2), **caractérisée en ce que**
- des segments de piston (4a) sont logés dans la partie supérieure (1a), glissant dans la partie supérieure (3a) du mécanisme de soupape, d'un cône de soupape (1),
- des segments de piston (4b) sont logés dans la partie inférieure (1c), glissant dans la partie inférieure (3b) du mécanisme de soupape, d'un cône de soupape (1),
- la surface supérieure sollicitée en pression (14) du cône de soupape (1) est d'une dimension exactement égale à celle de la surface inférieure sollicitée en pression (13) du cône de soupape (1),
- le cône de soupape (1) présente un diamètre inférieur dans la partie centrale (1b) et forme avec la partie supérieure et inférieure (3a et 3b) du mécanisme de soupape un compartiment annulaire (8), auquel est raccordé au moins un conduit d'aspiration (9) avec un raccord d'aspiration (17),
- la soupape de réglage de vapeur est manoeuvrée par un entraînement hydraulique à l'eau claire (7).

2. Soupape de réglage de vapeur suivant la revendication 1, **caractérisée en ce qu'**un produit antigel est mélangé à l'eau claire de l'entraînement hydraulique (7).

3. Soupape de réglage de vapeur suivant les revendications 1 et 2, **caractérisée en ce que** le cône de soupape (1), le mécanisme de soupape (3) et le corps de soupape (10), y compris l'entraînement hydraulique (7) à l'eau claire, sont disposés dans n'importe quelle position spatiale sur la turbine à vapeur ou sur la turbomachine.
